# EUROPEAN PATENT SPECIFICATION

(11) **EP 0 592 142 B1**
(45) Date of publication and mention of the grant of the patent: **26.02.1997**
(21) Application number: 93307726.5
(22) Date of filing: 29.09.1993
(51) Int. Cl.: F16J 15/12

(54) **Head gasket**
Zylinderkopfabdichtung
Joint de culasse

(30) Priority: 29.09.1992 JP 74026/92
(43) Date of publication of application: 13.04.1994
(73) Proprietor: NICHIAS CORPORATION, Tokyo 105 (JP)
(72) Inventor: Saito, Hiroshi, Kitakatsuragi-gun, Nara-ken (JP)
(74) Representative: Baldock, Sharon Claire

(56) References cited:
- GB-A- 2 169 362
- GB-A- 2 182 985
- US-A- 5 082 725
- US-A- 5 122 214

## Description

The present invention relates to an improved head gasket mounted mainly between a cylinder block and a cylinder head in an automobile engine.

Heretofore, as this type of head gasket, there is known a gasket in which asbestos joint sheets or expansion graphite sheets are superposed on both sides of a cold punched soft steel plate, a steel plate, or an emboss-worked aluminium base plate in one laminate.

Since a metal gasket made by cold-punching a soft steel plate has a high elastic modulus and is hardly deformable, close adhesion thereof to the surface of an opposite member is bad at a low superficial pressure part (part distant from clamping bolts) between the cylinder block and the cylinder head. Therefore it has a disadvantage such that it cannot follow deformations due to thermal distortion or thermal vibration, which gives rise to fluid (gas, oil, cooling water) leaks.

Although the asbestos joint sheet has a good close adhesion to the opposite member even at a low superficial pressure part, since it includes a number of minute bubbles within the material at a low contact surface pressure, no satisfactory airtightness can be obtained. In addition, the use of the asbestos joint sheet is restricted because of the environmental contamination of asbestos.

A gasket using a graphite sheet is expensive. Therefore, if the whole contact face is made of graphite in a large area gasket such as a cylinder gasket, the fabrication cost for the gasket is considerably increased. Furthermore, since graphite is easily scratched, the operability thereof is bad.

US-A-5122214 relates to a multi-layer head gasket assembly according to the preamble of claim 1.

We have now developed a head gasket which has good sealing characteristics even at a low superficial pressure contacting part; which does not leak at a low superficial pressure part within the material; and which has sealing characteristics which can be arbitrarily designed in accordance with the place to be sealed; and which can be fabricated at a low cost.

Accordingly, the present invention provides a head gasket in which a core material for the gasket is a metal plate or a metal plate on one side or both the sides of which a rubber layer or rubber layers is or are superposed and on both the sides of this core material superficial materials for the gasket are superposed, in each of which a foam rubber layer or foam rubber layers including separate bubbles is or are disposed on one side or both the sides of a metal plate, in which the core material and the superficial materials are superposed so that the metal plates are never brought into direct contact with each other and the outermost layers are foam rubber layers in the superficial materials.

By using a head gasket constructed as described above, since there are foam rubber layers including separate bubbles on the surfaces, which are brought into contact with opposite members, a great amount of compression can be obtained with a small fastening force.

Furthermore, the sealing characteristics around the cylinder bore can be improved e.g. by forming a bead by emboss-working the core material.

Still further, sliding is produced between different layers in the gasket by transverse movement produced by distortions due to heat and vibration in the cylinder head portion, in which the gasket is mounted, so that damage to the gasket decreases.

The present invention will be further described with reference to the accompanying drawings, in which:
Figs. 1A and 1B show an embodiment of the present invention, Fig. 1A being a cross-sectional view of a laminated structure of a gasket, Fig. 1B being a cross-sectional view of a separated structure thereof;
Fig. 2 is a plan view of the gasket partially cutoff;
Fig. 3 is a plan view of a completed head gasket;
Fig. 4 is a cross-sectional view of a laminated part of a gasket according to another embodiment;
Fig. 5 is a cross-sectional view of a laminated part of a gasket according to still another embodiment;
Fig. 6 is a cross-sectional view of a laminated part of a gasket according to still another embodiment;
Fig. 7 is a cross-sectional view of a laminated part of a gasket according to still another embodiment;
Fig. 8 is a cross-sectional view of a laminated part of a gasket according to still another embodiment;
Fig. 9 is a cross-sectional view of a cylinder bore part of a gasket according to still another embodiment;
Fig. 10 is a cross-sectional view of a cylinder bore part of a gasket according to still another embodiment; and
Fig. 11 is a cross-sectional view of a cylinder bore part of a gasket according to still another embodiment.

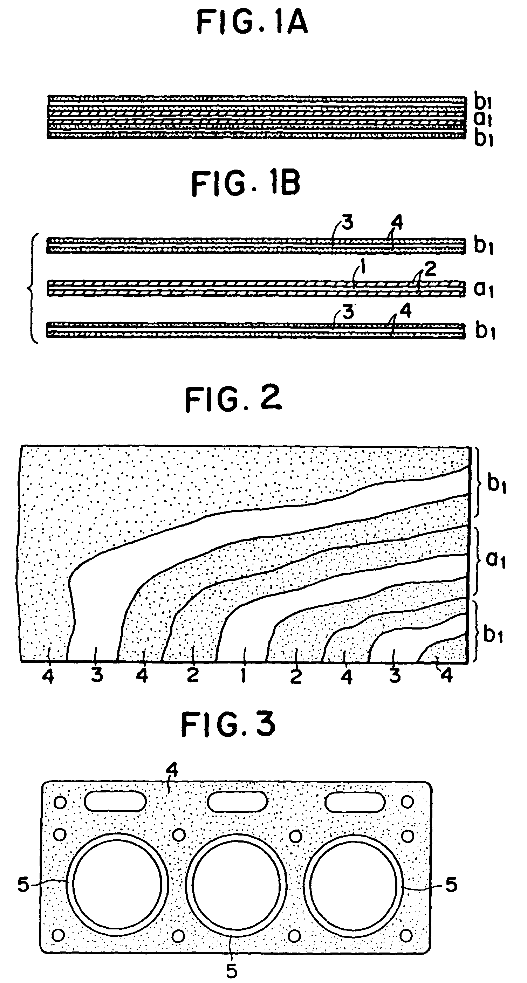

In Figs. 1A, 1B and 2, a₁ represents a core material and b₁ indicates a superficial material. Two superficial materials are superposed on both the sides of the core material a₁. A head gasket material is constructed by superposing the core material a₁ and the superficial materials b₁ described above in a sandwich shape.

The core material a₁ is composed of a metal plate 1 and rubber layers 2 disposed on both the sides thereof. Although the rubber layers are disposed on both the sides in the example indicated in the figure, a rubber layer may be disposed on one side.

The metal plate 1 forming the core material a₁ may be made of a stainless steel plate (SUS), a cold rolled steel plate (SPCC), an aluminum plate, etc., but it is not restricted thereto. The thickness of the metal plate 1 is preferably about 0.10 to 3.0mm. Nitrile rubber, acryl rubber, fluor rubber, etc. can be cited for rubber material forming the rubber layer 2, but other rubber materials can be arbitrarily selected to be used. The thickness of the rubber layer 2 is preferably about 200 to 1000µm.

The metal plate 3 forming the superficial material b₁ may be same as the metal plate a₁ for the core material described previously.

Rubber material for foam rubber layers 4 including a number of separate bubbles is formed by adding a foaming agent to a rubber material similar to those described previously to foam it. The thickness of the metal plate 3 and the foam rubber layer 4 are preferably of same order of magnitude as those used for the core material.

The gasket formed by superposing superficial material b₁ - core material a₁ - superficial material b₁ in a sandwich shape as described previously is worked by cold-punching in a predetermined shape for a cylinder gasket, as indicated in Fig. 3. The gasket is completed by mounting a U-shaped grommet 5 made of a metal material such as stainless steel on the periphery of each of cylinder bore.

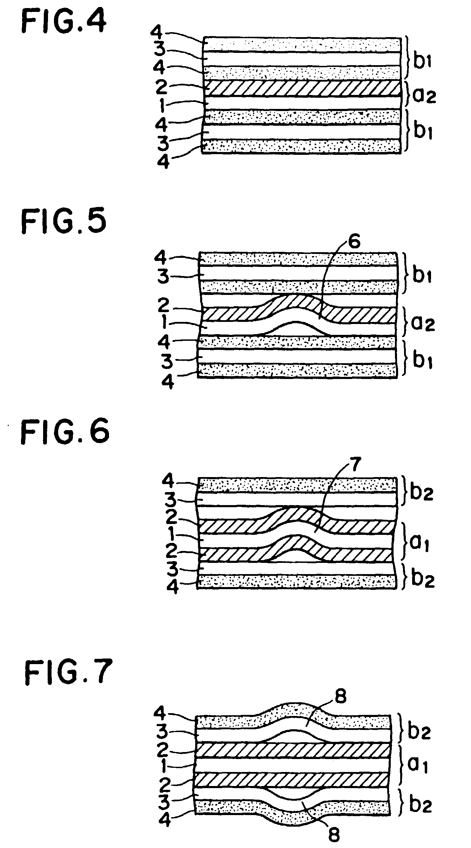

Figs. 4 to 8 show several other examples of the construction consisting of a core material a₁ and two superficial materials b₁ and examples of the construction having a bead.

Fig. 4 shows an example of the construction, in which the superficial materials b₁, b₁ are superposed on a core material a₂ consisting of a metal plate 1 and a rubber layer 2 disposed on one side thereof.

Fig. 5 shows an example of the construction, in which a bead 6 is formed in the core material a₂ indicated in Fig. 4.

Fig. 6 shows an example of the construction, in which a bead 7 is formed in the core material a₁ and the superficial materials b₂, in each of which a foam rubber layer 4 is disposed on one side of a metal plate 3.

Fig. 7 shows an example of the construction, in which the superficial material b₂, b₂, in each of which a bead 8 is formed, are superposed on the core material a₁ having no bead.

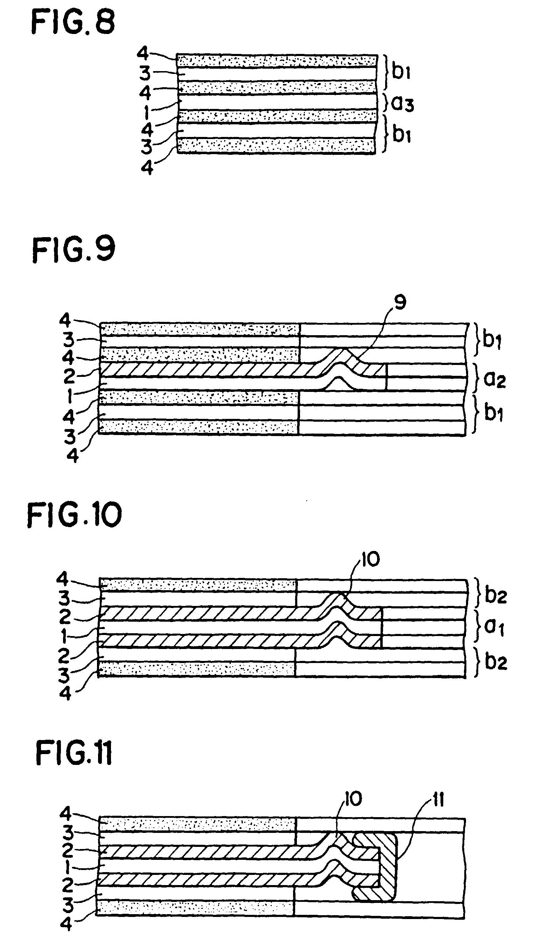

Fig. 8 shows an example of the construction, in which the superficial materials b₁ are superposed on both the sides of the core material a₃ consisting only of a metal plate 1.

Figs. 9 to 11 show two examples of the construction, in each of which a bead is formed in the cylinder bore part in a head gasket and an example of the construction, in which a grommet is mounted near the bead.

Fig. 9 shows an example of the construction, in which the superficial materials b₁, b₁ are removed at the bore portion and a bead 9 is formed in the core material a₂.

Fig. 10 shows an example of the construction, in which the superficial materials b₂, b₂ are removed at the bore portion and a bead 10 is formed in the core material a₁.

Fig. 11 shows an example of the construction, in which a grommet 11 is mounted on the core material a₁ indicated in Fig. 9.

As explained above, since the gasket according to the present invention is so constructed that two superficial materials, in each of which foam rubber layers are disposed on a metal plate, are superposed on both the sides of a core material, in which one or two rubber layers are disposed on a metal plate, following effects can be obtained.
(1) According to the gasket construction, in which two superficial materials are superposed on a core material at the center in a sandwich shape, it is possible to maintain sealing characteristics around each cylinder bore by disposing a bead on the core material, to increase a compression amount by using foam rubber layers in the superficial materials and thus to increase considerably sealing characteristics at a low superficial pressure.
(2) It is possible to secure easily sealing characteristics for a water hole and an oil hole with a small clamping force by superposing the superficial materials on the core material.
(3) In a gasket, in which the superficial materials are superposed on the core material, sliding between different layers is produced by transversal movement produced by distortions due to heat and vibration in the cylinder head portion, which can reduce damage to the gasket.
(4) With respect to a conventional gasket consisting of one sheet, by a gasket having a laminated structure, sealing by a bead in the core material or sealing by using foam rubber layers in the superficial materials is possible in accordance with positions to be sealed in a head gasket, which enlarges freedom for design.
(5) Although the core material and the superficial materials are superposed in a laminated structure, since there is no place, where metal plates are superposed directly on each other, there is no fear that leak is produced at a contact interface between different layers.
(6) Since the core material and the superficial materials can be fabricated separately by a through process, it is possible to realize considerable cost-down.

## Claims

1. A head gasket comprising a core material (a₁, a₂, a₃), a first and a second superficial material (b₁, b₂) comprising a metal plate (3) and which are disposed on both sides of the core material (a₁, a₂, a₃), characterised in that the core material (a₁, a₂, a₃) includes a metal plate (1) or a metal plate (1), at least on one side of which a rubber layer (2) is formed, and in that a foam rubber layer (4) including a number of separate bubbles is formed at least on one side of the metal plate (3) in each of the first and the second superficial materials (b₁, b₂) and wherein the core material (a₁, a₂, a₃) and the superficial materials (b₁, b₂) are superposed so that the metal plates (1, 3) are never superposed directly on each other and so that the outermost layers are the foam rubber layers (4).

2. A head gasket as claimed in claim 1, wherein at least one bead (6) is formed in the core material (a₂).

3. A head gasket as claimed in claim 1, wherein a bead (8) is formed at least in one of the superficial materials (b₂).

## Patentansprüche

1. Kopfdichtung, umfassend ein Innenmaterial (a₁, a₂, a₃), erste und zweite äußerliche Materialien (b₁, b₂), welche eine Metallplatte (3) umfassen und welche beiderseits des Innenmaterials (a₁, a₂, a₃) angeordnet sind,
dadurch gekennzeichnet, daß das Innenmaterial (a₁, a₂, a₃) eine Metallplatte (1) enthält oder eine Metallplatte (1), bei der an wenigstens einer Seite eine Gummischicht (2) gebildet ist, enthält,
und dadurch, daß eine Schaumgummischicht (4) mit einer Anzahl von einzelnen Bläschen wenigstens an einer Seite der Metallplatte (3) jeweils in dem ersten und dem zweiten äußerlichen Material (b₁, b₂) gebildet ist, wobei das Innenmaterial (a₁, a₂, a₃) und die äußerlichen Materialien (b₁, b₂) aufeinander geschichtet sind derart, daß die Metallplatten (1, 3) nie direkt aufeinander geschichtet sind und die äußersten Schichten die Schaumgummischichten (4) sind.

2. Kopfdichtung nach Anspruch 1, wobei wenigstens ein Wulst (6) in dem Innenmaterial (a₂) gebildet ist.

3. Kopfdichtung nach Anspruch 1, wobei ein Wulst (8) wenigstens im einem der äußerlichen Materialien (b₂) gebildet ist.

## Revendications

1. Joint de culasse, comprenant un matériau d'âme (a1, a2, a3), des premier et second matériaux de surface (b1, b2) comportant une plaque métallique (3) et disposés des deux côtés du matériau d'âme (a1, a2, a3), caractérisé en ce que le matériau d'âme (a1, a2, a3) inclut une plaque métallique (1) ou une plaque métallique (1), sur au moins un côté de laquelle est formée une couche de caoutchouc (2), et en ce qu'une couche de caoutchouc mousse (4) contenant un nombre d'alvéoles isolées est formée sur un côté au moins de la plaque métallique (3), dans chacun desdits premier et second matériaux de surface (b1, b2), et dans lequel le matériau d'âme (a1, a2, a3) et les matériaux de surface (b1, b2) sont superposés de façon que les plaques métalliques (1, 3) ne soient jamais superposées en venant directement en contact l'une avec l'autre, et de façon que les couches extrêmes extérieures soient constituées par les couches de caoutchouc mousse (4).

2. Joint de culasse selon la revendication 1, dans lequel au moins un bourrelet (6) est formé dans le matériau d'âme (a2).

3. Joint de culasse selon la revendication 1, dans lequel un bourrelet (8) est formé dans l'un au moins des matériaux de surface (b2).
